(19) Europäisches Patentamt
European Patent Office
Office européen des brevets

(11) EP 0 890 591 A2

(12) **EUROPEAN PATENT APPLICATION**

(43) Date of publication:
**13.01.1999 Bulletin 1999/02**

(51) Int. Cl.$^6$: **C08F 220/06**, C11D 3/37, C08F 222/00

(21) Application number: **98111501.7**

(22) Date of filing: **23.06.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **07.07.1997 JP 180830/97**
**18.08.1997 JP 221431/97**
**27.11.1997 JP 326146/97**

(71) Applicant:
**Idemitsu Petrochemical Co., Ltd.**
**Tokyo 108-0014 (JP)**

(72) Inventors:
- **Matsuo, Shigeru**
  **Tokuyama-shi, Yamaguchi 745-0843 (JP)**
- **Takahashi, Seiji**
  **Deceased (JP)**
- **Ito, Shinji**
  **Tokuyama-shi, Yamaguchi 745-0843 (JP)**
- **Seino, Yoshikatsu**
  **Tokuyama-shi, Yamaguchi 745-0843 (JP)**
- **Okada, Yasunari**
  **Tokuyama-shi, Yamaguchi 745-0843 (JP)**

(74) Representative:
**Türk, Gille, Hrabal**
**Brucknerstrasse 20**
**40593 Düsseldorf (DE)**

# (54) Acrylic polymer, process for the production of the same, and biodegradable builder

(57) Provided are an acrylic polymer having good chelatability and biodegradability; a method for efficiently producing it; a builder and a dispersant comprising the polymer; and a detergent composition containing the builder. The acrylic polymer has (a) a weight-average molecular weight of from 1,000 to 100,000, (b) a degree of calcium ion-sequestering ability, as measured at a pH of from 9 to 10 and at a temperature of 25°C, of from 120 to 300 mg/g in terms of calcium carbonate, and (c) a degree of biodegradability of not smaller than 30 %, while (d) giving, in proton nuclear magnetic resonance spectrometry ($^1$H-NMR) of the polymer precipitate as prepared by adding an aqueous solution of an alkali metal salt of the polymer to a mixture of water/acetone = 1/4 by volume followed by re-precipitating the polymer therein, a ratio of the integrated value of the peak area at δ of from 4.0 to 4.6 ppm to that of the peak area at δ of from 1.0 to 3.2 ppm of being not smaller than 0.01, and/or having (e) a melting point falling between 140 and 180°C.

Fig. 1

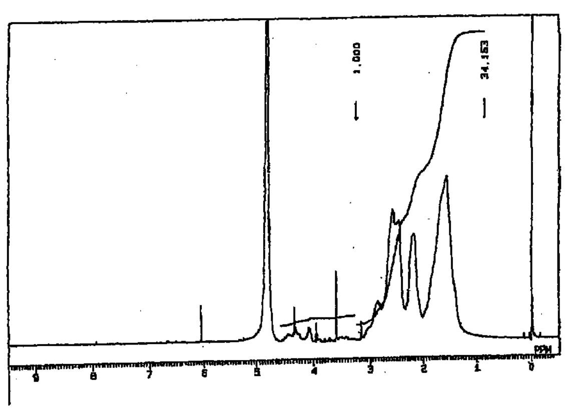

EP 0 890 591 A2

## Description

FIELD OF THE INVENTION

The present invention relates to an acrylic polymer, a method for producing it, a biodegradable builder, a biodegradable dispersant, and a detergent composition. More precisely, the invention relates to an acrylic polymer with excellent chelatability and biodegradability, which is favorably used as a builder for detergent and as a dispersant for inorganic pigment; to a method for efficiently producing it; to a biodegradable builder for detergent and a biodegradable dispersant for inorganic pigment, which comprise, as an essential ingredient, the acrylic polymer; and to a detergent composition which contains the biodegradable builder and which has high detergency and good affinity for the environment.

BACKGROUND OF THE INVENTION

Conventional detergent comprising surfactant as an essential ingredient contains a builder as an auxiliary component to the surfactant to thereby improve its detergency. As the builder, known are inorganic compounds which are alkaline in water, and polymers of unsaturated aliphatic carboxylic acids. As examples of the former, mentioned are sodium and potassium carbonates, hydrogencarbonates, phosphates, polyphosphates and silicates, as well as zeolite, etc.; while examples of the latter include polyacrylic acid, polymaleic acid, polyitaconic acid, and their salts with alkali metals.

Of those builders, much used are phosphates, polyphosphates and zeolite, as they are effective, economical and easy to handle. However, these are problematic from the viewpoint of the protection of the global environment in that phosphates and polyphosphates eutrophicate lakes, marshes and rivers while zeolite, as being insoluble in water, precipitates in rivers, lakes and marshes.

On the other hand, polyacrylic acid, polymaleic acid, polyitaconic acid and their salts with alkali metals are problematic in that their biodegradability is very poor.

Accordingly, it is desired to develop some other builders, of which the capability (especially, the chelating ability) is, needless-to-say, good and is at least comparable to that of the conventional builders, which are biodegradable to be gentle to the environment, without remaining for a long period of time on the earth, and are therefore not problematic from the viewpoint of the protection of the global environment, and which are economical.

Given that situation, Japanese Patent Application Laid-Open (JP-A) No. Hei-5-239127 discloses chelatable and biodegradable, hydrophilic crosslinked polymers for builders. To prepare the polymers, water-soluble oligomers, which have little chelatability by themselves but contain biodegradable low-molecular components in some degree or higher, are crosslinked at their main chains with a crosslinking agent, such as polyethylene glycol, citric acid, tartaric acid or the like, via a biodegradable ester or amido group to thereby increase their molecular weight, and the resulting crosslinked polymers are modified to have chelatability.

However, though having a low molecular weight, the linear polyacrylic acid moiety in those hydrophilic crosslinked polymers is hardly biodegradable, and, in addition, the polymers contain non-biodegradable high-molecular polyacrylic acids to no small extent. Therefore, the biodegradability of the hydrophilic crosslinked polymers disclosed is not satisfactory. In addition, the disclosed method for producing the polymers requires two steps, one for polymerizing the oligomer and the other for crosslinking the polymerized oligomer, and requires the special crosslinking agent. Accordingly, desired are chelatable and biodegradable polymers for builders capable of being produced through more simple steps.

Of the conventional builders noted above, acrylic polymers such as polyacrylic acid are specifically noted as being easy to produce through simple polymerization and being composed of polycarboxylic acids having good chelatability. To produce those acrylic polymers, in general, used is hydrogen peroxide as the polymerization initiator. Hydrogen peroxide is preferred, as its residue remains little in the polymer formed. However, where acrylic monomers are neutralized with a base and then polymerized in the presence of the polymerization initiator, hydrogen peroxide, the polymerization efficiency is low. For this, proposed was a method of adding a metal such as iron or cobalt, or an amine to the polymerization system. However, the method is problematic in that the polymers produced are often colored, and therefore their use is inevitably limited. In addition, where acrylic monomers are neutralized with a base and then polymerized in the presence of the polymerization initiator, hydrogen peroxide to obtain acrylic oligomers, a large amount of the polymerization initiator, hydrogen peroxide is needed. This is another problem in the art.

In the field of dispersants for inorganic pigments, sodium polyacrylate or the like is used for lowering the viscosity of slurry dispersions and for improving the viscosity stability thereof. However, polyacrylic acid is not biodegradable as so mentioned above. Also in this field, therefore, it is desired to develop some other dispersants which are biodegradable without remaining on the earth for a long period of time and which are economical, like the builders mentioned above.

## SUMMARY OF THE INVENTION

Given that situation, the object of the present invention is to provide a colorless, chelatable, biodegradable and economical acrylic polymer; an efficient method for producing it; a biodegradable builder and a biodegradable dispersant which comprise, as an essential ingredient, the acrylic polymer and which are free from environmental pollution or destruction; and a detergent composition with good detergency and good affinity for the environment, which contains the biodegradable builder.

In order to attain the object, we, the present inventors have assiduously studied, and, as a result, have found that when a per-ethylenic unsaturated dicarboxylic acid, such as permaleic acid or the like, is used as a polymerization initiator, then an acrylic monomer can be polymerized with ease in an aqueous medium in the presence of an alkali and a thiol compound and/or its derivative and of the polymerization initiator, or in the presence of an alkali and an alkali sulfide and/or an alkali hydrosulfide and of the polymerization initiator, to give acrylic polymers, and that the acrylic polymers having a specific molecular weight, a specific degree of calcium ion-sequestering ability and a specific degree of biodegradability and giving, in $^1$H-NMR, a specific peak pattern are colorless and have good chelatability and biodegradability. We have further found that, of the acrylic polymers, those of which the acid group is in the form of a salt thereof are favorable for biodegradable builders for detergent and also for biodegradable dispersants for inorganic pigment, and that a detergent composition comprising the builder has high detergency and good affinity for the environment. On the basis of those findings, we have completed the present invention.

Specifically, the invention provides the following:

(1) An acrylic polymer having (a) a weight-average molecular weight of from 1,000 to 100,000, (b) a degree of calcium ion-sequestering ability, as measured at a pH of from 9 to 10 and at a temperature of 25°C, of from 120 to 300 mg/g in terms of calcium carbonate, and (c) a degree of biodegradability of not smaller than 30 %, and (d) giving, in proton nuclear magnetic resonance spectrometry ($^1$H-NMR) of the polymer precipitate as prepared by adding an aqueous solution of an alkali metal salt of the polymer to a mixture of water/acetone = 1/4 by volume followed by reprecipitating the polymer therein, a ratio of the integrated value of the peak area at $\delta$ of from 4.0 to 4.6 ppm to that of the peak area at $\delta$ of from 1.0 to 3.2 ppm of being not smaller than 0.01.

(2) An acrylic polymer having (a) a weight-average molecular weight of from 1,000 to 100,000, (b) a degree of calcium ion-sequestering ability, as measured at a pH of from 9 to 10 and at a temperature of 25°C, of from 120 to 300 mg/g in terms of calcium carbonate, (c) a degree of biodegradability of not smaller than 30 %, and (e) a melting point falling between 140 and 180°C.

(3) An acrylic polymer having (a) a weight-average molecular weight of from 1,000 to 100,000, (b) a degree of calcium ion-sequestering ability, as measured at a pH of from 9 to 10 and at a temperature of 25°C, of from 120 to 300 mg/g in terms of calcium carbonate, (c) a degree of biodegradability of not smaller than 30 %, and (e) a melting point falling between 140 and 180°C, and (d) giving, in proton nuclear magnetic resonance spectrometry ($^1$H-NMR) of the polymer precipitate as prepared by adding an aqueous solution of an alkali metal salt of the polymer to a mixture of water/acetone = 1/4 by volume followed by re-precipitating the polymer therein, a ratio of the integrated value of the peak area at $\delta$ of from 4.0 to 4.6 ppm to that of the peak area at $\delta$ of from 1.0 to 3.2 ppm of being not smaller than 0.01.

(4) A biodegradable builder comprising, as an essential component, the acrylic polymer of any one of (1) to (3).

(5) A biodegradable dispersant comprising, as an essential component, the acrylic polymer of any one of (1) to (3).

(6) A detergent composition containing a surfactant component and the biodegradable builder of (4).

The acrylic polymer of (1) to (3) can be produced by polymerizing an acrylic monomer in an aqueous medium in the presence of an alkali, and a thiol compound and/or its derivative, and of a per-ethylenic unsaturated dicarboxylic acid.

The acrylic polymer of (1) can be produced by polymerizing an acrylic monomer in an aqueous medium in the presence of an alkali, and an alkali sulfide and/or an alkali hydrosulfide, and of a per-ethylenic unsaturated dicarboxylic acid.

## BRIEF DESCRIPTION OF THE DRAWINGS

Fig. 1 is a $^1$H-NMR chart of the polymer obtained in Example 1.

Fig. 2 is a DSC chart of the polymer obtained in Example 1.

Fig. 3 is a DSC chart of the polymer obtained in Comparative Example 2.

Fig. 4 is a $^1$H-NMR chart of the polymer obtained in Example 9.

DETAILED DESCRIPTION OF THE INVENTION

The acrylic polymer of the invention is obtained by polymerizing an acrylic monomer such as acrylic acid or the like, and has the properties mentioned below.

The acrylic polymer has (a) a weight-average molecular weight of from 1,000 to 100,000. If having a weight-average molecular weight of smaller than 1,000, the polymer has poor chelatability. On the other hand, if having a weight-average molecular weight of larger than 100,000, the polymer has poor biodegradability. In view of the balance between the chelatability and the biodegradability, the preferred range of the weight-average molecular weight of the polymer falls between 2,000 and 10,000. The weight-average molecular weight of the polymer is measured through gel permeation chromatography (GPC) in which polyacrylic acid is used as the standard substance.

The acrylic polymer of the invention has (b) a degree of calcium ion-sequestering ability of from 120 to 300 mg/g in terms of calcium carbonate. If having a degree of calcium ion sequestering ability of smaller than 120 mg/g, the polymer has poor chelatability. On the other hand, if having a degree of calcium ion sequestering ability of larger than 300 mg/g, the polymer forms precipitate. The preferred range of the degree of calcium ion-sequestering ability of the polymer falls between 160 and 300 mg/g. The degree of calcium ion-sequestering ability of the polymer is measured according to the method mentioned hereinunder, at a pH of from 9 to 10 and at a temperature of 25°C, and is represented in terms of calcium carbonate.

The acrylic polymer of the invention has (c) a degree of biodegradability of not smaller than 30 %. If having a degree of biodegradability of smaller than 30 %, the polymer is poorly biodegradable and cannot attain the object of the invention. The degree of biodegradability of the polymer is obtained according to JIS K6950, for which the polymer is tested for 28 days to measure its TOC (total organic carbon).

The acrylic polymer of the invention gives (d), in proton nuclear magnetic resonance spectrometry ($^1$H-NMR) of the polymer, a ratio of the integrated value of the peak area at $\delta$ of from 4.0 to 4.6 ppm to that of the peak area at $\delta$ of from 1.0 to 3.2 ppm of being not smaller than 0.01, and/or has (e) a melting point falling between 140 and 180°C.

Polymers that give the peak area ratio noted above of smaller than 0.01 have poor biodegradability, and therefore cannot attain the object of the invention. In $^1$H-NMR, used is a device of GSX-400 Model manufactured by JEOL Ltd. Precisely, an aqueous solution of an alkali metal salt of the polymer of the invention is added to a mixture of water/acetone = 1/4 by volume and the polymer is re-precipitated therein to thereby remove the component having a molecular weight of not larger than 500 from the resulting precipitate. The polymer precipitate thus prepared is subjected to $^1$H-NMR according to the method mentioned hereinunder to obtain its $^1$H-NMR chart.

Polymers having a melting point of lower than 140°C are problematic in that their biodegradability is poor; while those having a melting point of higher than 180°C have the disadvantage of poor solubility. The melting point of the polymer of the invention is measured through differential scanning calorimetry (DSC).

In the molecule of the acrylic polymer of the invention, the acid groups such as carboxyl groups may be in any form of complete free acids, complete salts, or partial salts composed of free acids and salts, and can be suitably selected depending on the use of the polymer. For complete salts and partial salts of the polymer, preferred are alkali metal salts of, for example, lithium, sodium, potassium or the like, and ammonium salts.

The method for producing the acrylic polymer is not specifically defined, and employable herein is any and every method capable of producing the polymer having the properties noted above. However, preferred are the methods of the invention mentioned hereinunder, in which the acrylic polymer having the intended properties is produced extremely efficiently.

Specifically, one method of the invention for producing the acrylic polymer that satisfies the requirements of (a), (b) and (c), and (d) and/or (e) comprises polymerizing an acrylic monomer in an aqueous medium in the presence of an alkali and a thiol compound and/or its derivative, and of a per-ethylenic unsaturated dicarboxylic acid (this method will be referred to as the first method). Another method for producing the acrylic polymer that satisfies the requirements of (a), (b), (c) and (d) comprises polymerizing an acrylic monomer in an aqueous medium in the presence of an alkali, and an alkali sulfide and/or an alkali hydrosulfide, and of a per-ethylenic unsaturated dicarboxylic acid (this method will be referred to as the second method).

The alkali to be used in these first and second methods includes, for example, alkali metal hydroxides such as lithium hydroxide, sodium hydroxide, potassium hydroxide and the like, and ammonia.

The amount of the alkali to be used is advantageously so selected that it is from 0.5 to 1.1 equivalents relative to one equivalent of the acid group such as carboxyl group in the starting material. The per-ethylenic unsaturated dicarboxylic acid generally has -COOH and -COOOH in the molecule, in which the latter -COOOH is not an acid group. Therefore, in general, one mole of the per-ethylenic unsaturated dicarboxylic acid shall have one mole of the acid group (carboxyl group).

As the thiol compound to be used in the first method, for example, preferred is a compound of a general formula (I):

$$HS\text{-}R\text{-}Y \qquad (I)$$

wherein R represents an alkylene group having from 1 to 20 carbon atoms; Y represents a hydrogen atom, -OH, $-NH_2$, -COOH, -SH, - O-$R^1$, or -S-$R^1$; and $R^1$ represents an alkyl group having from 1 to 10 carbon atoms.

In formula (I), the alkylene group having from 1 to 20 carbon atoms for R may be linear, branched or even cyclic, and includes, for example, a methylene group, an ethylene group, a propylene group, a butylene group, a pentylene group, a hexylene group, a heptylene group, an octylene group, a decylene group, a dodecylene group, a cyclopentylene group, a cyclohexylene group, etc. The alkyl group having from 1 to 10 carbon atoms for $R^1$ may be linear, branched or even cyclic, and includes, for example, a methyl group, an ethyl group, a propyl group, a butyl group, a pentyl group, a hexyl group, an octyl group, a cyclopentyl group, a cyclohexyl group, etc.

Examples of the thiol compound include aminoethanethiol, amylmercaptan, decanethiol, decanedithiol, cyclohexanethiol, cyclopentanethiol, di(2-mercaptoethyl) ether, ethanedithiol, heptanethiol, propanethiol, thioglycolic acid, mercaptoethanol, etc. Derivatives of the thiol compound include, for example, half esters of those thiol compounds and ethylenic unsaturated dicarboxylic acids. One or more of those thiol compounds and their derivatives are employed herein either singly or as combined.

The amount of the thiol compound to be used may fall generally between 1 and 30 % by weight, but preferably between 5 and 20 % by weight, more preferably between 5 and 15 % by weight, relative to the total weight of the monomer to be polymerized. The amount of the derivative of the thiol compound to be used may fall within the defined range in terms of the thiol compound.

On the other hand, in the second method, an alkali sulfide and/or an alkali hydrosulfide are/is used in place of the thiol compound and its derivative. Those salts include, for example, alkali sulfides such as lithium sulfide, sodium sulfide, potassium sulfide, ammonium sulfide, etc.; and alkali hydrosulfides such as lithium hydrosulfide, sodium hydrosulfide, potassium hydrosulfide, ammonium hydrosulfide, etc. Of those, preferred are sodium sulfide and sodium hydrosulfide. One or more of those alkali sulfides and alkali hydrosulfides are employed herein either singly or as combined.

The alkali sulfide and the alkali hydrosulfide may be in any form of anhydrides and hydrates, but preferred are hydrates.

As the case may be, the alkali sulfide and the alkali hydrosulfide may be formed in the reaction system by introducing hydrogen sulfide into the system in the presence of an alkali.

The amount of the alkali sulfide and the alkali hydrosulfide to be used may fall generally between 1 and 100 % by weight, but preferably between 5 and 30 % by weight, more preferably between a and 20 % by weight, relative to the total weight of the monomer to be polymerized.

The per-ethylenic unsaturated dicarboxylic acid to be used in the first and second methods acts as a polymerization initiator. For this, for example, preferred is a compound of a general formula (II):

[1]

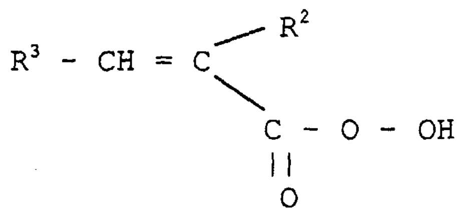

(II)

wherein $R^2$ represents a hydrogen atom, a methyl group, a carboxyl group, or a carboxylmethyl group; and $R^3$ represents a carboxyl group when $R^2$ is a hydrogen atom or a methyl group, but represents a hydrogen atom when $R^2$ is a carboxyl group.

Examples of the per-ethylenic unsaturated dicarboxylic acid include permaleic acid, percitraconic acid, peritaconic acid, etc. Preferably, the per-ethylenic unsaturated dicarboxylic acid is formed through reaction of an ethylenic unsaturated dicarboxylic acid and hydrogen peroxide, more preferably through reaction of its anhydride and hydrogen peroxide. For example, it is advantageously formed by reacting maleic anhydride, citraconic anhydride, itaconic anhydride or the like with hydrogen peroxide. Especially preferred is a reaction product of maleic anhydride and hydrogen peroxide.

In this case, it is desirable that the amount of hydrogen peroxide is substantially stoichiometric to the acid anhydride. Specifically, from 0.95 to 1.05 mols or so of hydrogen peroxide is reacted with 1 mol of the acid anhydride. As hydrogen peroxide, generally used is an aqueous hydrogen peroxide having a concentration of from 25 to 75 % by weight, preferably from 30 to 70 % by weight.

The reaction of the acid anhydride and hydrogen peroxide is preferably effected at a temperature falling between 20 and 60°C for 1 minute to 5 hours or so.

In the methods of the invention, an acrylic monomer is polymerized through radical polymerization for which the per-ethylenic unsaturated dicarboxylic acid used gives a polymerization-starting point. Therefore, the acrylic polymer to

be obtained in those methods shall have a residue of the ethylenic unsaturated dicarboxylic acid at its one terminal. The molecular weight of the polymer can be controlled by varying the amount of the per-ethylenic unsaturated dicarboxylic acid to be used.

In the invention, one or more of those per-ethylenic unsaturated dicarboxylic acids may be used either singly or as combined. The amount of the peracid to be used may be generally between 0.1 and 2.0 mols, but preferably between 0.5 and 1.5 mols, relative to 1 mol of the acrylic monomer.

The acrylic monomer includes, for example, acrylic acid, methacrylic acid, ethacrylic acid, etc. One or more of those monomers may be used either singly or as combined.

Optionally, in the invention, the acrylic monomer may be copolymerized with one or more of copolymerizable unsaturated monomers, for example, ethylenic unsaturated dicarboxylic acids such as maleic anhydride, maleic acid, fumaric acid, citraconic anhydride, citraconic acid, itaconic anhydride, itaconic acid, etc., as well as crotonic acid, $\alpha$-hydroxyacrylic acid, vinylsulfonic acid, allylsulfonic acid, vinyltoluenesulfonic acid, esters of unsaturated carboxylic acids with alcohols having from 1 to 12 carbon atoms, acrylamide, acrolein, etc.

In the first method of the invention, it is advantageous that an aqueous solution containing an alkali such as that mentioned above, a thiol compound and/or its derivative, a per-ethylenic unsaturated dicarboxylic acid, and an acrylic monomer (optionally along with a copolymerizable unsaturated monomer) are mixed all together to give a reaction system for polymerization. In this case, the thiol compound or its derivative may be dissolved in the alkali-containing aqueous solution.

On the other hand, in the second method, for example, (1) an aqueous solution containing an alkali, a per-ethylenic unsaturated dicarboxylic acid, and an acrylic monomer (optionally along with a copolymerizable unsaturated monomer) are added to an aqueous solution containing an alkali sulfide and/or an alkali hydrosulfide to give a reaction system for polymerization; (2) an aqueous solution containing an alkali, an aqueous solution containing an alkali sulfide and/or an alkali hydrosulfide, a per-ethylenic unsaturated dicarboxylic acid, and an acrylic monomer (optionally along with a copolymerizable unsaturated monomer) are mixed all together to give a reaction system for polymerization; or (3) hydrogen sulfide is introduced into an aqueous solution containing an alkali, while a per-ethylenic unsaturated dicarboxylic acid and an acrylic monomer (optionally along with a copolymerizable unsaturated monomer) are added thereto, to give a reaction system for polymerization.

The polymerization temperature in the first and second methods is not specifically defined, but may fall generally between 30 and 130°C, preferably between 60 and 110°C. The polymerization time could not be determined indiscriminately, as depending on the polymerization temperature and others, but, in general, may well be between 10 minutes and 10 hours or so.

In both of the first and second methods, it is desirable that an acrylic monomer and a part of an alkali are previously put into a reactor and thereafter the other materials are added thereto all together to give a reaction system for polymerization, in view of the balance between the $Ca^{++}$-sequestering ability and the biodegradability of the polymer to be produced.

Of the acrylic polymer thus produced in the manner mentioned hereinabove, the acid groups such as carboxyl groups in the molecule are generally in the form of their salts. Therefore, the polymer is, either after having been isolated or directly without being isolated, solidified through lyophilization, and the resulting solid may be used as a biodegradable builder or dispersant.

If desired, the polymer may be neutralized with an acid to thereby convert the salts of acid groups such as carboxyl groups therein into complete free acids or partial salts, and then isolated.

In that manner, the acrylic polymer having the desired properties of the invention is obtained efficiently. Those of the acrylic polymer, of which the acid groups such as carboxyl groups in the molecule are in the form of salts, can be used as the biodegradable builder and the biodegradable dispersant of the invention.

The biodegradable builder of the invention is used in a detergent composition, which has high detergency and high affinity for the environment.

On the other hand, the biodegradable dispersant of the invention is hydrophilic, as having carboxyl groups, and is therefore extremely useful as a dispersant for inorganic pigments such as calcium carbonate, clay and others to be used for paper coating.

The dispersant of the invention may be used alone, but may be combined with any other additives such as polyvinyl alcohol and the like, within the range not interfering with the effect of the invention.

Where from 0.05 to 2.0 parts by weight or so of the dispersant is added to 100 parts by weight of an inorganic pigment such as calcium carbonate, clay or the like, and dispersed in water, the resulting dispersion of the pigment may have a low viscosity and a high fluidity.

The detergent composition of the invention comprises a surfactant component and, as a builder component, the acrylic polymer mentioned above, in which the surfactant component may be selected from anionic surfactants, cationic surfactants, nonionic surfactants and ampholytic surfactants.

Regarding the amount of the builder and the surfactant to be in the detergent composition, it is desirable that the

two are in the composition each in an amount of from 10 to 40 % by weight while the remainder of from 20 to 80 % by weight comprises any of enzyme, bleaching agent, inorganic builder (e.g., zeolite, sodium carbonate, etc.) and others.

The anionic surfactants employable herein include, for example, soap of fatty acids, salts of alkyl ether-carboxylic acids, salts of N-acylamino acids, salts of alkylbenzenesulfonic acids, salts of alkylnaphthalenesulfonic acids, salts of dialkylsulfosuccinates, salts of $\alpha$-olefinsulfonic acids, salts of sulfates with higher alcohols, salts of alkyl ether-sulfuric acids, salts of polyoxyethylene-alkyl phenyl ether-sulfuric acids, salts of sulfates with fatty acid alkylolamides, salts of alkyl ether-phosphates, salts of alkylphosphates, etc.

The cationic surfactants include, for example, aliphatic amine salts, aliphatic quaternary ammonium salts, benzalkonium salts, benzetonium chloride, pyridinium salts, imidazolinium salts, etc.

The nonionic surfactants include, for example, polyoxyethylene alkyl ethers, polyoxyethylene alkylphenyl ethers, polyoxyethylene-polyoxypropylene block polymers, polyoxyethylene-polyoxypropylene alkyl ethers, polyoxyethylene-glycerin fatty acid esters, polyoxyethylene-castor oil, polyoxyethylene-sorbitan fatty acid esters, polyoxyethylene-sorbitol fatty acid esters, polyethylene glycol-fatty acid esters, fatty acid monoglycerides, polyglycerin-fatty acid esters, sorbitan-fatty acid esters, fatty acid alkanolamides, polyoxyethylene-fatty acid amides, polyoxyethylene-alkylamines, alkylamine oxides, etc.

The ampholytic surfactants include, for example, carboxybetain-type compounds, salts of aminocarboxylic acids, imidazolinium betain, etc.

As being chelatable, the acrylic polymer of the invention is also usable as a scale inhibitor in various devices of coolant systems, water pipe lines in boilers, etc. As being well biodegradable, wastes of the acrylic polymer of the invention have little influences on the environment.

Now, the invention is described in more detail with reference to the following Examples, which, however, are not intended to restrict the scope of the invention.

The properties as well as the detergency and the dispersing power of the acrylic polymer samples prepared hereinunder were measured according to the methods mentioned below.

(1) Number-average Molecular Weight, Weight-average Molecular Weight:

The molecular weight of each sample was measured through gel permeation chromatography (GPC), using polyacrylic acid as the standard substance.

For this, used was a Waters' system, ALC/GPC 150C Model equipped with a built-in differential diffractometric detector and a column system of ASAHIPAK (GF-310HQ + GF-7MHQ). The mobile phase was aqueous solution of 1 mM $NaH_2PO_4$/aqueous solution of 7 mM $Na_2HPO_4$ (1/1); the column temperature was 40°C; the flow rate was 0.7 ml/min; and the amount of the sample charged was 200 $\mu$l.

(2) Peak Ratio from $^1$H-NMR:

For this, used was a device of GSX-400 manufactured by JEOL Ltd. A solution of a polymer sample in a solvent of heavy water, having a polymer concentration of smaller than 5 % by weight, was put into a test tube having a diameter of 5 mm, and subjected to $^1$H-NMR at room temperature in an SGNON mode at 400 MHz, and the data were integrated 32 times. The polymer sample to be tested was prepared by adding an aqueous solution of an alkali metal salt of the polymer to a mixture of water/acetone = 1/4 by volume followed by re-precipitating the polymer therein to remove the component having a molecular weight of not larger than 500 from the polymer precipitate. The thus-prepared polymer precipitate was used as the polymer sample. From the $^1$H-NMR chart of the polymer sample, obtained was the ratio of the integrated value of the peak area at $\delta$ of from 4.0 to 4.6 ppm to that of the peak area at $\delta$ of from 1.0 to 3.2 ppm.

(3) Calcium Ion Sequestering Ability ($Ca^{++}$ Sequestering Ability):

20.0 mg of a polymer sample was dissolved in 100 g of an aqueous solution having a calcium ion concentration of 40 ppm, an $NH_4Cl$ concentration of 0.1 N, an $NH_4OH$ concentration of 0.4 N, and a KCl concentration of 0.1 N, and having a pH of from 9 to 10, and the calcium ion concentration in the resulting solution was measured at 25°C, using an ion meter. The amount of calcium ions as trapped by 1 g of the polymer was obtained in terms of $CaCO_3$, which indicates the $Ca^{++}$-sequestering ability (mg • $CaCO_3$/g) of the polymer.

(4) Biodegradability:

According to JIS K6950, each polymer sample was tested for 28 days to measure its TOC (total organic carbon), from which was obtained the degree of biodegradability of the polymer.

(5) Melting Point:

The melting point of each polymer sample was measured through differential scanning calorimetry (DSC). Precisely, using a Seiko's differential scanning calorimeter (DSC-220 Model), each polymer sample was tested as follows: 5 mg of a polymer sample was heated up to 220°C at a heating rate of 20°C/min, and then immediately cooled with dry ice. The thus-cooled sample was then heated at a heating rate of 20°C/min, while being monitored within a temperature range between 50 and 220°C. The heat absorption peak of the sample thus measured indicates the melting point thereof.

(6) Detergency:

Organic soiling components mentioned below, burnt clay and carbon black were mixed in a ratio of 69.7/29.8/0.5 (by weight) to prepare an artificial soiling composition.

| | |
|---|---|
| Oleic Acid | 28.3 wt.pts. |
| Triolein | 15.6 wt.pts. |
| Cholesterol-olein | 12.2 wt.pts. |
| Liquid Paraffin | 2.5 wt.pts. |
| Squalene | 2.5 wt.pts. |
| Cholesterol | 1.6 wt.pts. |
| Gelatin | 7.0 wt.pts. |
| Total | 69.7 wt.pts. |

Clean fabric was soiled with this artificial soiling composition in an wet system using an aqueous solvent, and the thus-soiled fabric was cut into pieces of 5 cm x 5 cm each. These pieces had a degree of reflectivity of from 38 to 43 %. The surface reflectivity of each soiled piece was measured. Those soiled pieces were subjected to a washing test under the condition mentioned below.

Washing Condition:

| | |
|---|---|
| Washing Tester: | Terg-O-Tometer |
| Number of Revolution: | 120 rpm |
| Hardness of Water: | 90 ppm (in terms of $CaCO_3$) |
| Amount of Washing Liquid: | 900 ml |
| Washing Temperature: | 30°C |
| Concentration of Detergent: | 0.067 % |
| Bath Ratio: | 30 times |
| Washing Time: | 10 minutes |
| Rinsing Time: | Two times for 3 minutes each |
| Drying: | Sandwiched between sheets of filter paper and dried by ironing. |

Next, the surface reflectivity of the washed test piece was measured, and the detergency of the detergent tested was obtained according to the following equation.

Detergency (%) = [(K/S of soiled fabric) - (K/S of washed fabric)]/[(K/S of soiled fabric) - (K/S of clean fabric)] x 100

wherein;

$K/S = (1-R)^2/2R$ (Kubelka-Munk's equation) in which R indicates the surface reflectivity of fabric.

(7) Dispersing Power:

A slurry comprised of calcium carbonate (manufactured by Kanto Chemical Co.) and water in a ratio of 60/40 (by weight) was prepared, to which was added a sodium salt of a polymer sample in an amount of 0.3 % by weight relative to the amount of calcium carbonate in the slurry, and stirred for 3 minutes. After having been left static for 1 minute, the viscosity of the resulting mixture was measured with a B-type rotary viscometer (Viscometer VT-04 Model, manufactured by RION Co.), which indicates the dispersing power of the polymer sample tested. The viscosity measured of the slurry to which no polymer was added was 10 dPa • s.

Example 1:

15 g of water was put into a 500-ml separable flask equipped with a stirrer and a thermo-couple, and heated in an oil bath at 110°C. To this were dropwise added a reaction product of 58.8 g of maleic anhydride and 34.05 g of aqueous 60 wt.% hydrogen peroxide, and 43.2 g of acrylic acid, and a solution of 11.7 g of mercaptoethanol dissolved in 98 g of aqueous 50 wt.% sodium hydroxide solution, all together over a period of 30 minutes, with stirring them. After the addition, the resulting mixture was further heated and stirred at the same temperature for 1 hour. The reaction product was lyophilized to obtain a solid. The properties of the polymer obtained herein are shown in Table 1.

An aqueous solution of an alkali metal salt of this polymer was added to a mixture of water/acetone = 1/4 by volume, in which the polymer was re-precipitated. The resulting polymer precipitate was dissolved in heavy water, and the polymer solution was subjected to $^1$H-NMR. Fig. 1 shows the chart of $^1$H-NMR of the polymer, in which are seen the absorption essentially derived from the terminal hydroxyl group in the range of from 4.0 to 4.6 ppm, that from the epoxy group at 3.6 ppm, that from the acrylic acid-maleic acid copolymer in the range of from 1.1 to 3.1 ppm, and that from the mercaptoethanol in the range of from 3.0 to 3.2 ppm. The melting point of the polymer was found to be 167°C. The DSC chart of the polymer from which the melting point thereof was obtained is shown in Fig. 2.

Example 2:

The same process as in Example 1 was repeated except that the time for dropwise addition of the compounds was changed to 1 hour. The properties of the polymer obtained herein are shown in Table 1. The polymer had a melting point of 156°C.

Example 3:

15 g of water was put into a 500-ml separable flask equipped with a stirrer and a thermo-couple, and heated in an oil bath at 110°C. To this were dropwise added a reaction product of 58.8 g of maleic anhydride and 34.05 g of aqueous 60 wt.% hydrogen peroxide, and 51.8 g of acrylic acid, and a solution of 11.7 g of mercaptoethanol dissolved in 107.8 g of aqueous 50 wt.% sodium hydroxide solution, all together over a period of 30 minutes, with stirring them. After the addition, the resulting mixture was further heated and stirred at the same temperature for 1 hour. The reaction product was lyophilized to obtain a solid. The properties of the polymer obtained herein are shown in Table 1. The polymer had a melting point of 160°C and 178°C.

Example 4:

15 g of water was put into a 500-ml separable flask equipped with a stirrer and a thermo-couple, and heated in an oil bath at 110°C. To this were dropwise added a reaction product of 58.8 g of maleic anhydride and 34.05 g of aqueous 60 wt.% hydrogen peroxide, and 43.2 g of acrylic acid, 11.7 g of mercaptoethanol, and 98 g of aqueous 50 wt.% sodium hydroxide solution, all together over a period of 30 minutes, with stirring them. After the addition, the resulting mixture was further heated and stirred at the same temperature for 1 hour. The reaction product was lyophilized to obtain a solid. The properties of the polymer obtained herein are shown in Table 1. The polymer had a melting point of 157°C.

Example 5:

1.5 g of water was put into a 100-ml separable flask equipped with a stirrer and a thermo-couple, and heated in an oil bath at 110°C. To this were dropwise added a reaction product of 3.9 g of maleic anhydride and 2.27 g of aqueous 60 wt.% hydrogen peroxide, and 2.88 g of acrylic acid, and a solution of 0.77 g of mercaptoethylamine dissolved in 6.4 g of aqueous 50 wt.% sodium hydroxide solution, all together over a period of 30 minutes, with stirring them. After the addition, the resulting mixture was further heated and stirred at the same temperature for 1 hour. The reaction product was lyophilized to obtain a solid. The properties of the polymer obtained herein are shown in Table 1. The polymer had

a melting point of 164°C.

Example 6:

The same process as in Example 5 was repeated except that 0.69 g of di(2-mercaptoethyl) ether was used in place of 0.77 g of mercaptoethylamine. The properties of the polymer obtained herein are shown in Table 1.

Example 7:

The same process as in Example 1 was repeated except that no water was put into the separable flask. The properties of the polymer obtained herein are shown in Table 1. The polymer had a melting point of 157°C.

Example 8:

A 300-ml separable flask equipped with a stirrer and a thermo-couple was heated in an oil bath at 110°C. Into this were dropped a reaction product of 4.9 g of maleic anhydride and 3.9 g of mercaptoethanol, a reaction product of 34.3 g of maleic anhydride and 19.8 g of aqueous 60 wt.% hydrogen peroxide, 28.8 g of acrylic acid, and 64 g of aqueous 50 wt.% sodium hydroxide solution, all together over a period of 30 minutes, with stirring them. After this, the resulting mixture was further heated and stirred at the same temperature for 1 hour. The reaction product was lyophilized to obtain a solid. The properties of the polymer obtained herein are shown in Table 1. The polymer had a melting point of 156°C.

Comparative Example 1:

5 g of water was put into a 100-ml separable flask, to which was added 3.92 g (0.04 mols) of maleic anhydride. In addition, 6.4 g of aqueous 50 wt.% sodium hydroxide solution was added thereto. The resulting mixture was heated at 100°C, to which was dropwise added a mixture of 2.88 g (0.04 mols) of acrylic acid and 1.14 g (0.02 mols) of hydrogen peroxide, over a period of 1 hour by using a chemical pump. After the completion of the addition, the resulting mixture was kept stirring at the same temperature for 2 hours, and then lyophilized to obtain a solid. The properties of the polymer obtained herein are shown in Table 1. The melting point of the polymer was not found.

Table 1

| | Yield (g) | Yield (%) | Number-average Molecular Weight | Weight-average Molecular Weight |
|---|---|---|---|---|
| Example 1 | 158.4 | 98 | 1770 | 23100 |
| Example 2 | 160.0 | 99 | 1870 | 12900 |
| Example 3 | 211.5 | 96 | 2310 | 13200 |
| Example 4 | 156.7 | 97 | 1620 | 13100 |
| Example 5 | 10.1 | 94 | 1380 | 12500 |
| Example 6 | 10.2 | 95 | 1920 | 19900 |
| Example 7 | 155.2 | 96 | 1540 | 16000 |
| Example 8 | 9.9 | 92 | 1320 | 14600 |
| Comparative Example 1 | 9.3 | 90 | 8500 | 40000 |

Table 1 (continued)

| | $Ca^{++}$ Sequestering Ability (mg/g) | Biodegradability (%) | Ratio from $^1H$-NMR[1)] |
|---|---|---|---|
| Example 1 | 230 | 84 | 3.81 |
| Example 2 | 223 | 77 | 3.27 |
| Example 3 | 186 | 90 | 3.15 |
| Example 4 | 209 | 75 | 2.93 |
| Example 5 | 205 | 60 | 1.19 |
| Example 6 | 280 | 35 | 3.04 |
| Example 7 | 223 | 58 | 2.62 |
| Example 8 | 216 | 35 | 1.07 |
| Comparative Example 1 | 240 | <5 | 0.06 |

1) $\{\delta\ (4.0\text{-}4.6)/\delta\ (1.0\text{-}3.2)\} \times 100$

Comparative Example 2:

A 500-ml separable flask equipped with a stirrer, a thermo-couple and a reflux condenser was heated at 100°C. Into this were dropped a solution of 49.0 g of maleic anhydride and 36.0 g of acrylic acid dissolved in 150 ml of toluene, and a solution of 1.27 g of azobisisobutyronitrile (AIBN) dissolved in 20 ml of toluene, all together over a period of 1 hour. After this, the resulting mixture was further heated and stirred at the same temperature for 8 hours. After having been cooled, the polymer formed was precipitated in ether and recovered. The thus-recovered polymer was formed into an aqueous solution having pH of 9, which was tested for measuring the properties of the polymer. The yield of the polymer was 116 g (92 %); the number-average molecular weight of the polymer was 4700; the degree of calcium sequestering ability thereof was 240 mg/g; and the degree of biodegradability thereof was lower than 3 %. In the measurement of the melting point of the polymer, any heat absorption peak that indicates the melting of the polymer was found. The DSC chart of the polymer is shown in Fig. 3.

Example 9:

15 g of water and 24 g of sodium sulfide 5-hydrate were put into a 500-ml separable flask equipped with a stirrer and a thermo-couple, and heated in an oil bath at 110°C. To this were dropwise added a reaction product of 39.2 g of maleic anhydride and 22.7 g of aqueous 60 wt.% hydrogen peroxide, and 28.8 g of acrylic acid, and 40.0 g of aqueous 50 wt.% sodium hydroxide solution, over a period of 30 minutes, with stirring them. After the addition, the resulting mixture was further heated and stirred for 3 hours. The reaction product was lyophilized to obtain a solid. The properties of the polymer obtained herein are shown in Table 2.

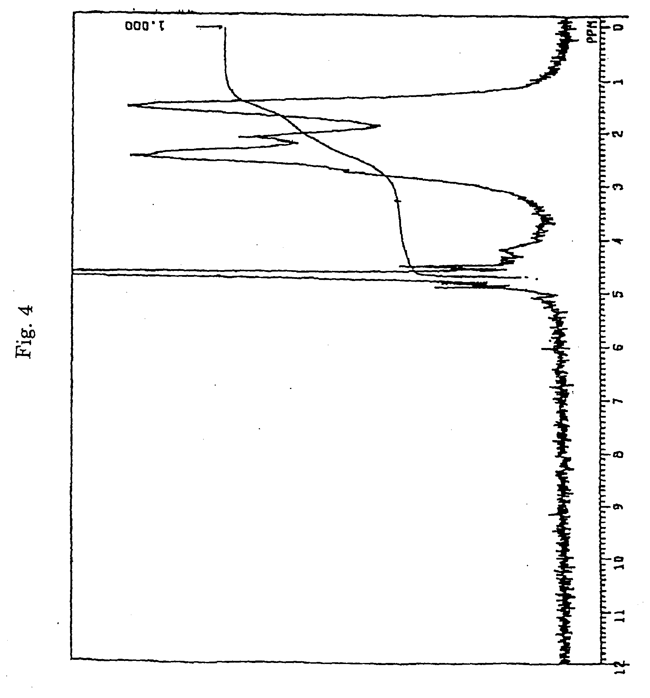

An aqueous solution of an alkali metal salt of this polymer was added to a mixture of water/acetone = 1/4 by volume, in which the polymer was re-precipitated. The resulting polymer precipitate was dissolved in heavy water, and the polymer solution was subjected to $^{1}H$-NMR. Fig. 4 shows the chart of $^{1}H$-NMR of the polymer, in which are seen the absorption derived from the methylene-methylene group adjacent to the sulfone group or the terminal hydroxyl group in the range of from 4.0 to 4.6 ppm, and that from the acrylic acid-maleic anhydride copolymer in the range of from 1.1 to 3.1 ppm.

Examples 10 to 13:

The same process as in Example 9 was repeated except that the amounts of the materials used were varied as in Table 2. The properties of the polymers obtained are shown in Table 2.

Comparative Example 3:

The same process as in Example 9 was repeated except that sodium sulfide 5-hydrate was not used but that the amount of aqueous 50 wt.% sodium hydroxide solution to be added was increased to compensate it. The properties of the polymer obtained are shown in Table 2.

Table 2

| | | Example 9 | Example 10 | Example 11 |
|---|---|---|---|---|
| Materials Used (g) | Maleic Anhydride | 39.2 | 39.2 | 39.2 |
| | Acrylic Acid | 28.8 | 28.8 | 28.8 |
| | $Na_2S \cdot 5H_2O$ | 24.0 | 16.5 | 33.0 |
| | Aqueous 50 wt.% NaOH | 40.0 | 48.0 | 32.0 |
| | Aqueous 60 wt.% $H_2O_2$ | 22.7 | 22.7 | 34.0 |
| Yield (g) | | 92.7 | 90.0 | 98.0 |
| Yield (%) | | 91 | 89 | 93 |
| Number-average Molecular Weight | | 1900 | 1700 | 1160 |
| Weight-average Molecular Weight | | 9550 | 9100 | 6200 |
| $Ca^{++}$ Sequestering Ability (mg/g) | | 192 | 250 | 176 |
| Biodegradability (%) | | 66 | 52 | 73 |
| Ratio from $^1H$-NMR[1)] | | 7.2 | 5.7 | 8.3 |

1) {δ (4.0-4.6)/δ (1.0-3.2)} x 100

Table 2 (continued)

| | | Example 12 | Example 13 | Comparative Example 3 |
|---|---|---|---|---|
| Materials Used (g) | Maleic Anhydride | 39.2 | 39.2 | 39.2 |
| | Acrylic Acid | 28.8 | 28.8 | 28.8 |
| | $Na_2S \cdot 5H_2O$ | 33.0 | 16.5 | - |
| | Aqueous 50 wt.% NaOH | 32.0 | 48.0 | 64.0 |
| | Aqueous 60 wt.% $H_2O_2$ | 22.7 | 22.7 | 22.7 |
| Yield (g) | | 96.9 | 93.3 | 88.1 |
| Yield (%) | | 92 | 93 | 95 |
| Number-average Molecular Weight | | 1850 | 2230 | 8930 |
| Weight-average Molecular Weight | | 9600 | 13150 | 35700 |
| $Ca^{++}$ Sequestering Ability (mg/g) | | 182 | 264 | 258 |
| Biodegradability (%) | | 75 | 49 | 22 |
| Ratio from $^1H$-NMR[1)] | | 7.8 | 6.8 | 2.6 |

1) {δ (4.0-4.6)/δ (1.0-3.2)} x 100

Example 14:

The polymer obtained in Example 1 was formed into an aqueous solution, which was then controlled to have pH of 10 with sodium hydroxide added thereto. Using this as a builder, prepared was a detergent composition as in Table 3. The composition was tested for its detergency, and the data obtained are shown in Table 3.

Comparative Example 4:

In the same manner as in Example 14 except that A-type zeolite was used as the builder in place of the polymer of

Example 1, prepared was a detergent composition. This was tested for its detergency, and the data obtained are shown in Table 3.

Example 15:

The polymer obtained in Example 3 was formed into an aqueous solution, which was then controlled to have pH of 10 with sodium hydroxide added thereto. Using this as a builder, prepared was a detergent composition as in Table 3. The composition was tested for its detergency, and the data obtained are shown in Table 3.

Comparative Example 5:

In the same manner as in Example 15 except that A-type zeolite was used as the builder in place of the polymer of Example 3, prepared was a detergent composition. This was tested for its detergency, and the data obtained are shown in Table 3.

Example 16:

The polymer obtained in Example 9 was formed into an aqueous solution, which was then controlled to have pH of 10 with sodium hydroxide added thereto. Using this as a builder, prepared was a detergent composition as in Table 3. The composition was tested for its detergency, and the data obtained are shown in Table 3.

Example 17:

The polymer obtained in Example 11 was formed into an aqueous solution, which was then controlled to have pH of 10 with sodium hydroxide added thereto. Using this as a builder, prepared was a detergent composition as in Table 3. The composition was tested for its detergency, and the data obtained are shown in Table 3.

Table 3

| | | Examples | | | | Comparative Examples | |
|---|---|---|---|---|---|---|---|
| | | 14 | 15 | 16 | 17 | 4 | 5 |
| Detergent Composition (wt.%) | LAS | 25 | 20 | 25 | 20 | 25 | 20 |
| | AS | 10 | 10 | 10 | 10 | 10 | 10 |
| | Nonionic Surfactant | - | 5 | - | 5 | - | 5 |
| | Polymer of Example 1 | 20 | - | - | - | - | - |
| | Polymer of Example 3 | - | 20 | - | - | - | - |
| | Polymer of Example 9 | - | - | 20 | - | - | - |
| | Polymer of Example 11 | - | - | - | 20 | - | - |
| | A-type Zeolite | - | - | - | - | 20 | 20 |
| | Sodium Silicate | 10 | 10 | 10 | 10 | 10 | 10 |
| | PEG | 2 | 2 | 2 | 2 | 2 | 2 |
| | Sodium Carbonate | 20 | 15 | 20 | 15 | 20 | 15 |
| | Sodium Sulfate | - | 5 | - | 5 | - | 5 |
| | Water | balance | balance | balance | balance | balance | balance |

Table 3 (continued)

| | | Examples | | | | Comparative Examples | |
|---|---|---|---|---|---|---|---|
| | | 14 | 15 | 16 | 17 | 4 | 5 |
| Detergency (%) | | 65 | 63 | 67 | 65 | 50 | 52 |
| [Notes]<br>LAS: Sodium Linear Alkylbenzenesulfonate<br>AS: Sodium Alkylsulfate<br>PEG: Polyethylene Glycol | | | | | | | |

Examples 18 to 30, and Comparative Example 6:

A part of the polymer obtained in each of Examples 1 to 13 and Comparative Example 1 was formed into an aqueous solution, which was controlled to have pH of 10 with sodium hydroxide, and then lyophilized. The resulting solid was tested for its dispersibility. The data obtained are shown in Table 4.

Table 4

| | Polymer Salt Used | Dispersibility (dPa • s) |
|---|---|---|
| Example 18 | Na salt of Example 1 | 3.2 |
| Example 19 | Na salt of Example 2 | 2.8 |
| Example 20 | Na salt of Example 3 | 2.8 |
| Example 21 | Na salt of Example 4 | 2.9 |
| Example 22 | Na salt of Example 5 | 3.1 |
| Example 23 | Na salt of Example 6 | 2.9 |
| Example 24 | Na salt of Example 7 | 3.3 |
| Example 25 | Na salt of Example 8 | 3.2 |
| Example 26 | Na salt of Example 9 | 3.0 |
| Example 27 | Na salt of Example 10 | 3.3 |
| Example 28 | Na salt of Example 11 | 2.8 |
| Example 29 | Na salt of Example 12 | 2.9 |
| Example 30 | Na salt of Example 13 | 3.2 |
| Comparative Example 6 | Na salt of Comparative Example 1 | 3.3 |

Example 31:

9.8 g of maleic anhydride, 4.0 g of sodium hydroxide and 20 g water were put into a 500-ml separable flask equipped with a stirrer and a thermo-couple, and heated in an oil bath at 110°C. To this were dropwise added a reaction product of 68.6 g of maleic anhydride and 39.7 g of aqueous 60 wt.% hydrogen peroxide, and 57.6 g of acrylic acid, and a solution of 60 g of sodium hydroxide and 15.6 g of mercaptoethanol in 60 g water, all together over a period of 60 minutes, with stirring them. After the addition, the resulting mixture was further heated and stirred at the same temperature for 1 hour. The reaction product was lyophilized to obtain a solid. Testing this gave the following data.

Yield: 202 g
Yield: 96 %
Number-average Molecular Weight: 7870
Weight-average Molecular Weight: 23800
Ca++ Sequestering Ability: 271
Biodegradability: 71 %
Ratio from $^1$H-NMR: 7.2

As has been mentioned hereinabove, the acrylic polymer of the invention has good chelatability and biodegradability, and is favorably used, for example, as a biodegradable builder for detergent and a biodegradable dispersant for inorganic pigment.

The detergent composition of the invention, which contains the acrylic polymer as a builder, has high detergency and good affinity for the environment.

According to the method of the invention, the acrylic polymer produced is colorless. The method is extremely effective, economical and advantageous for producing the polymer.

While the invention has been described in detail and with reference to specific embodiments thereof, it will be apparent to one skilled in the art that various changes and modifications can be made therein without departing from the spirit and scope thereof.

## Claims

1. An acrylic polymer having (a) a weight-average molecular weight of from 1,000 to 100,000, (b) a degree of calcium ion-sequestering ability, as measured at a pH of from 9 to 10 and at a temperature of 25°C, of from 120 to 300 mg/g in terms of calcium carbonate, and (c) a degree of biodegradability of not smaller than 30 %, and (d) giving, in proton nuclear magnetic resonance spectrometry ($^1$H-NMR) of the polymer precipitate as prepared by adding an aqueous solution of an alkali metal salt of the polymer to a mixture of water/acetone = 1/4 by volume, followed by re-precipitating the polymer therein, a ratio of the integrated value of the peak area at $\delta$ of from 4.0 to 4.6 ppm to that of the peak area at $\delta$ of from 1.0 to 3.2 ppm of being not smaller than 0.01.

2. An acrylic polymer having (a) a weight-average molecular weight of from 1,000 to 100,000, (b) a degree of calcium ion-sequestering ability, as measured at a pH of from 9 to 10 and at a temperature of 25°C, of from 120 to 300 mg/g in terms of calcium carbonate, (c) a degree of biodegradability of not smaller than 30 %, and (e) a melting point falling between 140 and 180°C.

3. An acrylic polymer having (a) a weight-average molecular weight of from 1,000 to 100,000, (b) a degree of calcium ion-sequestering ability, as measured at a pH of from 9 to 10 and at a temperature of 25°C, of from 120 to 300 mg/g in terms of calcium carbonate, (c) a degree of biodegradability of not smaller than 30 %, and (e) a melting point falling between 140 and 180°C, and (d) giving, in proton nuclear magnetic resonance spectrometry ($^1$H-NMR) of the polymer precipitate as prepared by adding an aqueous solution of an alkali metal salt of the polymer to a mixture of water/acetone = 1/4 by volume followed by re-precipitating the polymer therein, a ratio of the integrated value of the peak area at $\delta$ of from 4.0 to 4.6 ppm to that of the peak area at $\delta$ of from 1.0 to 3.2 ppm of being not smaller than 0.01.

4. The acrylic polymer as claimed in any one of claims 1 to 3, of which the acid groups in the molecule are in the form of salts.

5. A method for producing the acrylic polymer of any one of claims 1 to 3, comprising polymerizing an acrylic monomer in an aqueous medium in the presence of an alkali, and a thiol compound and/or its derivative, and of a per-ethylenic unsaturated dicarboxylic acid.

6. The method as claimed in claim 5, wherein an alkali, a thiol compound and/or its derivative, a per-ethylenic unsaturated dicarboxylic acid, and an acrylic monomer are mixed all together to give a reaction system for polymerization.

7. The method as claimed in claim 5, wherein a thiol compound and/or its derivative are/is dissolved in an aqueous solution of an alkali, and the resulting solution is added to the reaction system for polymerization.

8. A method for producing the acrylic polymer of claim 1, comprising polymerizing an acrylic monomer in an aqueous medium in the presence of an alkali, and an alkali sulfide and/or an alkali hydrosulfide, and of a per-ethylenic unsaturated dicarboxylic acid.

9. The method as claimed in claim 8, wherein the alkali sulfide is sodium sulfide.

10. The method as claimed in claim 8, wherein the alkali hydrosulfide is sodium hydrosulfide.

11. The method as claimed in claim 5 or 8, wherein the per-ethylenic unsaturated dicarboxylic acid is a reaction product of maleic anhydride and hydrogen peroxide.

**12.** A biodegradable builder comprising, as an essential component, the acrylic polymer of any one of claims 1 to 4.

**13.** A biodegradable dispersant comprising, as an essential component, the acrylic polymer of any one of claims 1 to 4.

**14.** A detergent composition containing a surfactant component and the biodegradable builder of claim 12.

Fig. 1

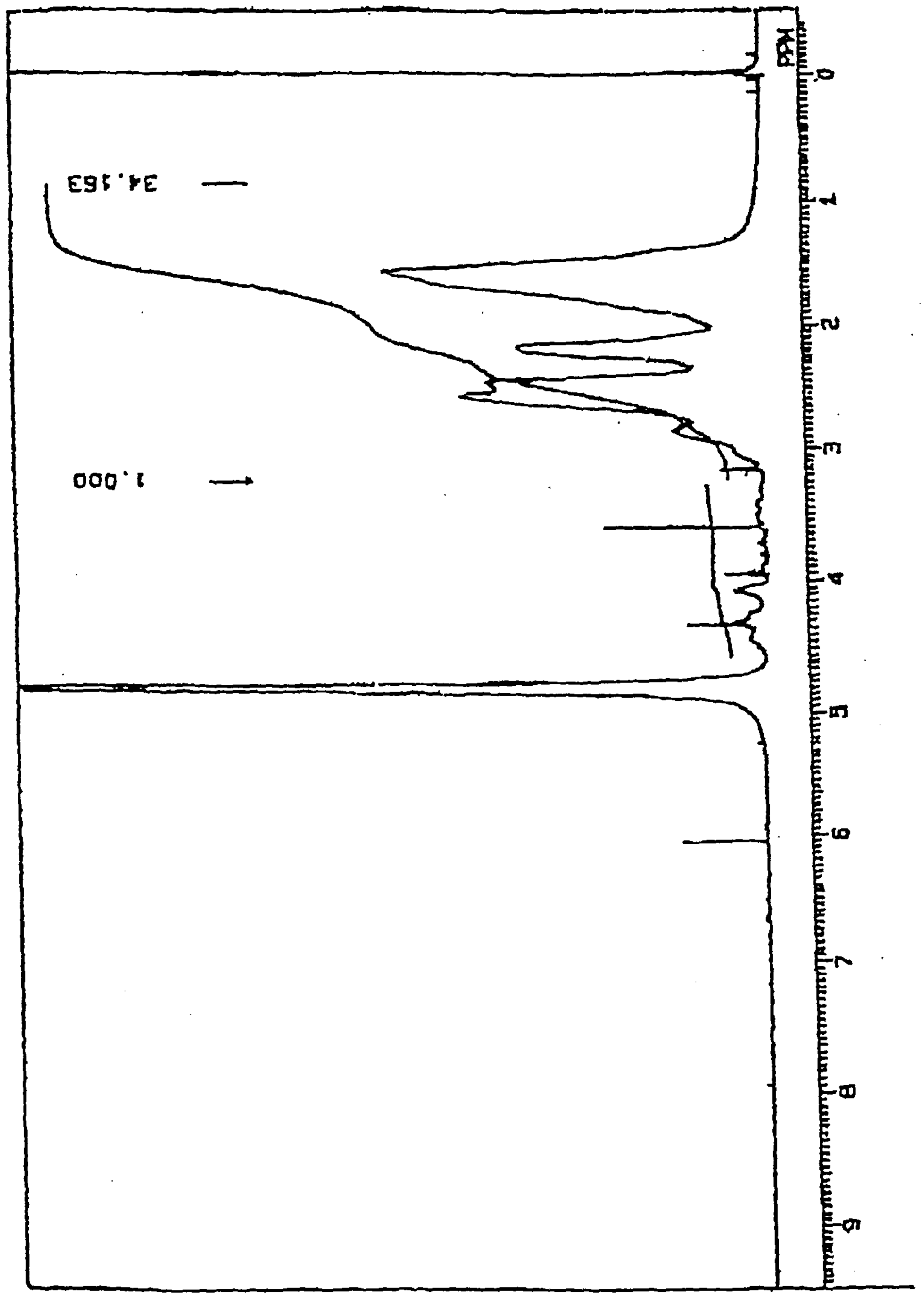

Fig. 2

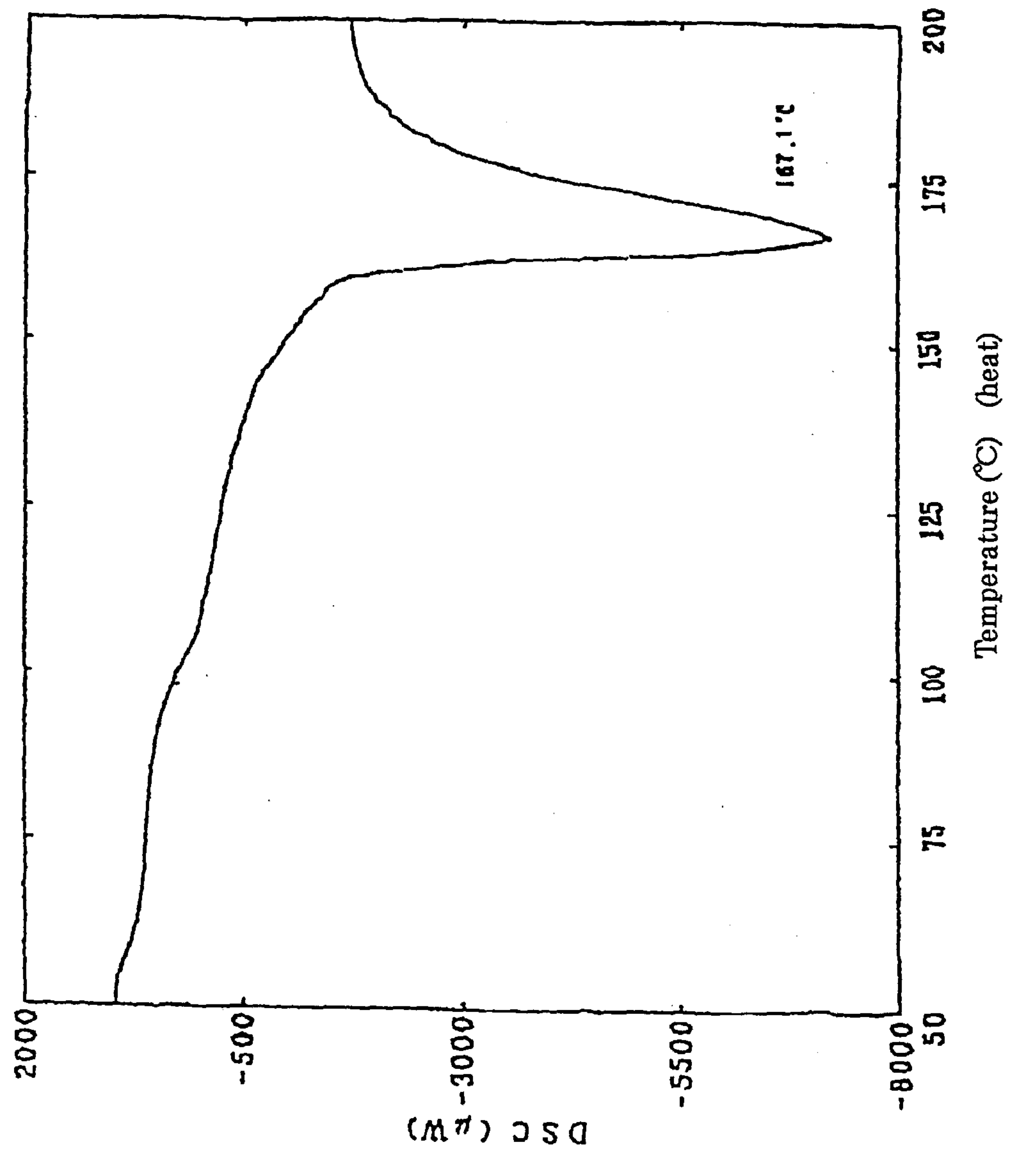
2000
-500
-3000
-5500
-8000
DSC (μW)
50
75
100
125
150
175
200
Temperature (℃) (heat)
167.1°C

Fig. 3

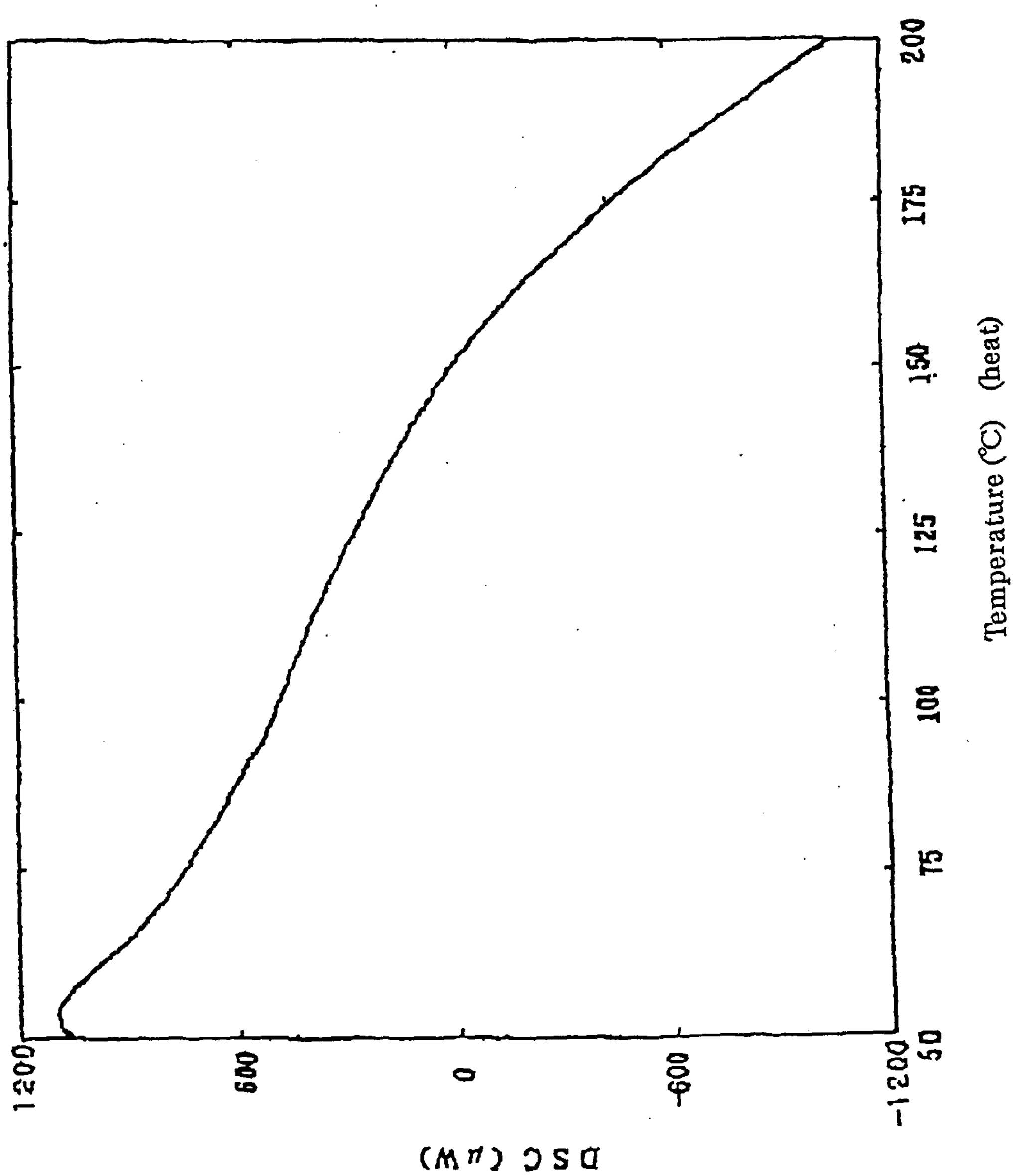

1200
600
0
-600
-1200
DSC (μW)
50
75
100
125
150
175
200
Temperature (℃) (heat)

Fig. 4